(19) Europäisches Patentamt / European Patent Office / Office européen des brevets

(11) **EP 2 401 136 B1**

(12) **FASCICULE DE BREVET EUROPEEN**

(45) Date de publication et mention
de la délivrance du brevet:
**06.08.2014 Bulletin 2014/32**

(21) Numéro de dépôt: **10710878.9**

(22) Date de dépôt: **24.02.2010**

(51) Int Cl.:
**B29C 70/46** *(2006.01)*      **B29C 70/54** *(2006.01)*

(86) Numéro de dépôt international:
**PCT/FR2010/050317**

(87) Numéro de publication internationale:
**WO 2010/097547 (02.09.2010 Gazette 2010/35)**

(54) **PROCÉDÉ DE COMPACTAGE EN COTE FINIE D'UNE PIÈCE COMPOSITE THERMOPLASTIQUE A FIBRES CONTINUES**

VERFAHREN ZUR ENDMASSVERDICHTUNG EINES THERMOPLASTISCHEN VERBUNDTEILS MIT ENDLOSFASERN

METHOD FOR COMPACTING TO ITS FINISHED DIMENSIONS A THERMOPLASTIC COMPOSITE PART WITH CONTINUOUS FIBRES

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **27.02.2009 FR 0951244**

(43) Date de publication de la demande:
**04.01.2012 Bulletin 2012/01**

(73) Titulaire: **Airbus Operations (S.A.S.)**
**31060 Toulouse (FR)**

(72) Inventeurs:
• **KURTZ, Didier**
  **F-44210 Pornic (FR)**
• **CHOTARD, Florian**
  **F-44300 NANTES (FR)**

(74) Mandataire: **Gicquel, Olivier Yves Gérard et al**
**AIRBUS OPERATIONS (S.A.S.)**
**ETRT - M0101/1**
**316, route de Bayonne**
**31060 Toulouse (FR)**

(56) Documents cités:
**WO-A1-03/078164      FR-A1- 2 766 407**
**FR-A1- 2 905 891**

• **F. C. Campbell: "Manufacturing processes for advanced composites" 2004, ELSEVIER , Oxford, UK , XP002547705 ISBN: 1856174158pages 369-372, figure 11**

**EP 2 401 136 B1**

**Description**

L'invention appartient au domaine des procédés de fabrication de pièces composites structurales constituées d'une matrice thermoplastique renforcée par des fibres continues. Plus particulièrement l'invention concerne un procédé permettant d'obtenir des pièces en cote finie, c'est à dire sans opération d'usinage supplémentaire en une seule opération de compactage-consolidation.

Les matériaux composites comprenant une matrice constituée d'une matière plastique renforcée par des fibres permettent de constituer des pièces mécaniques caractérisées par un rapport très avantageux entre leur résistance mécanique et leur poids. Ce type de pièce est avantageux dans toute application ou un tel rapport poids - résistance est essentiel. Par exemple, dans les applications touchant aux véhicules, afin d'autoriser des consommations énergétiques réduites et plus particulièrement dans le domaine de l'aéronautique. Dans ces domaines de tels matériaux renforcés par des fibres continues remplacent avantageusement les matériaux métalliques et notamment les alliages légers.

Cependant, la mise en oeuvre et la transformation de ces matériaux composites renforcés par des fibres continues reste coûteuse en regard des procédés de mise en oeuvre utilisés pour les matériaux métalliques.

En effet les matériaux métalliques permettent la fabrication de pièces structurales par formage plastique de métaux en feuilles ou de profilés. De tels procédés permettent des cadences de fabrication très élevées et le plus souvent la réalisation de pièces en cotes finies en sortie de presse, c'est à dire, qui ne nécessitent pas de reprise en usinage après le formage. Comparativement, la fabrication de pièces en matériaux composite à renfort fibreux continu fait appel à des techniques de stratification, de drapage pli à pli, soit de fibres sèches, soit de fibres pré-imprégnées.

Lorsqu'il s'agit de fibres sèches, la préforme est constituée sur un gabarit à la forme de la pièce finale. Ladite préforme qui ne présente qu'une faible cohésion et qui est par conséquent délicate à manipuler est placée dans un moule et imprégnée de résine par des techniques connues, telles que le transfert de résine liquide sous pression ou l'infusion de résine. Ces procédés sont longs, nécessitent des outillages coûteux et sont difficiles à automatiser. Ils ne permettent pas d'atteindre des cadences de production élevées sauf à multiplier le nombre d'outillages.

Alternativement le drapage peut être réalisé en forme à partir de fibres pré-imprégnées d'une résine thermodurcissable. Une telle résine présente à température ambiante une pégosité suffisante pour stabiliser les plis déposés et la préforme. Le drapage peut être effectué par des moyens automatisés. La préforme obtenue est ensuite cuite sous pression dans un moule adapté afin d'obtenir la pièce finale. Si ce procédé permet une automatisation plus poussée, il ne permet pas non plus d'atteindre des cadences de fabrication comparables à celles des pièces métalliques. Par ailleurs les pré-imprégnés de résine thermodurcissable ont une durée limite d'utilisation liée à la polymérisation lente de la résine y compris à température ambiante.

Les composites à base de résine thermoplastique autorisent, du fait de la réversibilité de la réaction de fusion - solidification de la résine, des procédés proches des procédés utilisés pour les matériaux métalliques. Ainsi des plaques de composites à renfort fibreux non continu peuvent être pré-constituées, puis estampées à la manière de métaux en feuille selon un procédé poinçon matrice ou poinçon vessie en chauffant les dites plaques au-dessus d'une température de « ramollissement » de la résine, température qui est comprise entre la température de transition vitreuse et la température de fusion de la résine, selon la nature de ladite résine.

Ce type de procédé permet de s'approcher des cadences de fabrication des pièces métalliques. En revanche, il n'est pas applicable directement à des composites à renfort fibreux continu. En effet, de tels renforts, tels que des fibres de verre, de carbone ou d'aramide, ne présentent pas de capacité de déformation plastique. En conséquence l'estampage d'une plaque, ou flan, constituée d'un matériau composite à renfort fibreux continu n'est possible qu'en permettant un glissement interlaminaire des plis constituant la plaque.

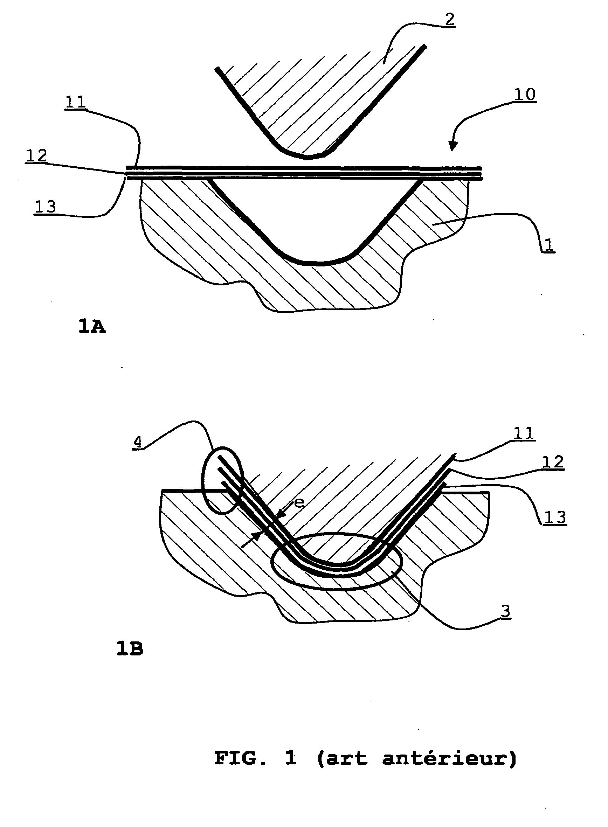

Ce type de procédé est connu de l'art antérieur et est par exemple décrit dans le brevet EP1543942 au nom de la demanderesse. La figure 1 est un synopsis de ce procédé. Les flans sont au préalable découpés, en général en panoplie, dans une plaque pré-compactée, présentant la séquence d'empilement désirée. Figure 1A, le flan (10) pré-compacté et constitué de plis (11, 12, 13) est chauffé à une température proche de la température de fusion. L'application du poinçon (2), figure 1B, permet de former la pièce en provoquant le glissement interlaminaire des plis. Ce glissement est rendu possible par la fluidité de la résine à cette température. La difficulté consiste à provoquer ce glissement sans entraîner l'essorage de la résine entre les fibres notamment au sommet du poinçon (2). A cette fin, l'empreinte est balancée, c'est à dire que l'orientation de la pièce dans l'opération de formage est choisie de telle sorte que le mouvement du poinçon se traduise par une mise en pression relativement uniforme des parois de la pièce, sans blocage des bords. La pièce est ensuite maintenue sous pression à une valeur d'entrefer (e) contrôlée jusqu'à son refroidissement, où elle peut être démoulée. Du fait du glissement interlaminaire les bords de la pièce doivent faire l'objet d'une finition ultérieure. En effet, le glissement est visible sur ces bords qui sont en général non compactés et qui présentent un déficit de résine.

La pièce doit donc faire l'objet d'un détourage, lequel est délicat, car les bords non compactés sont très susceptibles au délaminage, délaminage qui peut se propager à l'intérieur de la pièce sous l'action d'un outil coupant. Il n'est donc pas possible, selon ce procédé, d'obtenir des pièces en cote finies en sortie de presse. Par ailleurs ce procédé nécessite le stockage de plaque pré-compactées correspondant à la stratification désirée de la pièce, plaques pré-compactées qui ne peuvent plus être utilisées si les séquences d'empilement de la pièce sont modifiées, par exemple à la suite d'une optimisation, ou pour une autre pièce qui présenterait une séquence d'empilement différente. Ces plaques dédiées entraînent des immobilisations et rendent difficiles l'optimisation de l'utilisation de la matière.

En comparaison, les procédés faisant appel à des techniques de drapage en forme permettent de conserver la matière sous forme de nappes ou de tissus, lesquels sont assemblés au dernier moment pour constituer la préforme. Utilisés pour la fabrication de pièces thermoplastiques, les procédés de consolidation-compactage d'un empilement de plis imprégnés de résine thermoplastique font généralement appel à des dispositifs utilisant des vessies associées ou non à des plaques de compactage, ceci afin de compenser le foisonnement important de la résine lors du cycle de consolidation, de sorte que ces procédés sont dédiés à la réalisation de pièces relativement planes ou ne présentant que de faibles profondeurs d'embouti, c'est-à-dire des profondeurs d'embouti de l'ordre du dixième des plus grandes dimensions de la pièce ou inférieures. Un exemple d'un tel procédé est décrit dans la demande internationale WO2008/031866 au nom de la demanderesse.

Le document WO 03/078164 divulgue un procédé de fabrication d'une pièce structurale comprenant au moins deux ailes s'étendant dans des plans sécants, constituée d'un matériau thermoplastique composite à renforts fibreux comprenant au moins deux plis de fibres continues, lesdites fibres se prolongeant d'une aile à l'autre. Ce document ne traite toutefois pas du problème de décalages interlaminaires des bords de plis et ne mentionne donc pas d'étape de découpe spécifiquement dédiée à la résolution de ce dit problème.

Il existe donc un besoin pour un procédé de formage rapide en cotes finies, c'est-à-dire produisant des pièces présentant des bords nets et une précision de fabrication telle qu'un détourage ultérieur ne soit pas nécessaire, applicable à des pièces structurales présentant un embouti profond, constituées de plusieurs plis d'un matériau à renfort fibreux continu qui évite le stockage de plaques stratifiées dédiées à ce type de pièce. Un embouti profond correspond à une profondeur d'embouti du même ordre de grandeur que la plus grande dimension de la pièce.

Pour répondre à ce besoin l'invention propose un procédé de fabrication d'une pièce structurale comprenant au moins deux ailes s'étendant dans des plans sécants constituée d'un matériau thermoplastique composite à renfort fibreux comprenant au moins deux plis de fibres continues, lesdites fibres se prolongeant d'une aile à l'autre et comprenant :

- Une étape de découpe consistant à découper les au moins deux plis dans un tissu et/ou une nappe de fibres pré-imprégnées d'une résine thermoplastique
- Une étape de drapage consistant à assembler les plis de manière à créer une préforme ;
- Une étape de consolidation consistant à compacter la dite préforme à la forme définitive de la pièce en la soumettant à un cycle de température et de pression déterminé ;

tel que l'étape de découpe comprend la découpe de chaque pli à un contour déterminé par l'orientation des fibres et la position du pli dans l'épaisseur de la pièce. L'utilisation d'une résine thermoplastique permet de répondre au problème du stockage des nappes ou des tissus pré-imprégnés, une telle résine ne présentant pas de durée limite d'utilisation tout en évitant de stocker des plaques pré-compactées dont l'utilisation est dédiée à un type de pièce.

La découpe précise à un contour fonction de la position du pli dans l'épaisseur permet d'obtenir des bords nets à l'issu du compactage en forme et d'obtenir une pièce au contour fini sans détourage ultérieur.

Avantageusement, l'étape de consolidation est réalisée dans un outillage comprenant un poinçon et une matrice rigides. Ainsi il est possible d'obtenir une épaisseur de pièce calibrée en tout point et un état de surface parfait des deux faces, caractéristiques difficiles voire impossibles à obtenir à l'aide des dispositifs à vessie de l'art antérieur du fait de la souplesse de ladite vessie.

Afin de stabiliser la préforme, l'étape de drapage comprend l'assemblage des plis par une soudure. Une telle soudure est réalisée en chauffant localement et pendant un bref instant l'empilement de pré-imprégné. La résine fluidifiée par le chauffage flue entre les plis et les maintient ensuite fermement assemblés lors de son refroidissement. Une telle soudure peut être réalisée par points ou selon des lignes de soudure, par des moyens tels qu'un fer à souder dans le cas d'un drapage manuel, ou par d'autres moyens plus énergétiques tel que par laser ou par effecteur à ultrasons, ou sonotrode, dans le cas d'un drapage automatique.

Avantageusement une telle soudure est réalisée par points successifs ou selon une ligne de soudure le long d'une génératrice de formage. Les génératrices de formage correspondent aux lignes de pliage de la préforme plane pour obtenir la pièce. Il n'y a pas de déplacement interlaminaire des plis le long de ces génératrices au cours du pliage. Lesdites génératrices sont déterminées par le balancement de la pièce dans l'outillage. La position des lignes de formage sur chaque pli définit également le périmètre dudit pli en fonction de sa position dans l'empilement. Le pré-assemblage des plis selon les génératrices de formage permet de placer de manière plus précise la préforme dans l'outillage d'une part et d'autre part d'éviter durant la fermeture du moule tout déplacement de la préforme.

L'étape de consolidation de la préforme est réalisée selon un cycle de pression - température comprenant :

- une montée en température sous une première pression P1, appliquée à la préforme jusqu'à une température égale ou supérieure à la température de fusion de la résine ;
- suivie d'un maintien à cette température sous une pression P2 supérieure à P1 ;
- suivie d'un refroidissement jusqu'à une température T2 inférieure à la température de transition vitreuse de la résine sous la pression P2 ;
- suivi du relâchement de la pression.

La première mise en pression, optionnellement associée à un tirage au vide de l'empreinte, permet de favoriser le dégazage de la préforme, la seconde mise en pression est appliquée lorsque la résine est déjà fluidifiée et permet d'assurer le compactage. Le maintien de la pression durant toute la phase de refroidissement permet de limiter les distorsions de la préforme au cours de cette phase.

L'invention concerne également un outillage pour la mise en oeuvre du procédé décrit ci-avant. Un tel outillage comprend un poinçon et une matrice rigides tels que la fermeture de l'outillage crée une chambre étanche à la forme de la pièce entre le poinçon et la matrice. Avantageusement ledit outillage comprend des moyens permettant d'assurer l'étanchéité de la chambre entre deux positions relatives du poinçon et de la matrice correspondant à deux valeurs d'entrefer (e1, e2) définies. Cette chambre étanche permet de tirer au vide l'empreinte afin de favoriser le dégazage de la préforme lors de la fusion de la résine et d'éviter toute perte de résine, par écoulement hors de l'empreinte, lors des différentes phases de consolidation de la préforme.

Selon un mode de réalisation avantageux de l'outillage :

- le poinçon comprend une bordure faisant saillie par rapport à la forme de la pièce,
- la matrice comprend en bordure en creux par rapport à la forme de la pièce ;
- la bordure du poinçon étant apte à se loger dans la bordure de la matrice lors de la fermeture de l'outillage ;
- un joint déformable étant logé entre les bordures du poinçon et de la matrice

Ainsi le volume de l'outillage et le contour de la pièce est parfaitement délimité est invariable dès la fermeture de l'outillage. Le joint déformable permet de conserver l'étanchéité de la chambre quelque soit l'entrefer.

Afin d'assurer un dégazage optimal, l'outillage selon l'invention comprend des moyens aptes à aspirer les gaz contenus dans ladite chambre étanche afin d'y créer un vide primaire.

Afin d'assurer la santé matière des pièces réalisées à l'aide du procédé selon l'invention, l'outillage comprend des moyens aptes à appliquer la préforme placée dans la chambre étanche, une pression sensiblement égale à P1 pour une première valeur entrefer (e1) et une pression sensiblement égale à P2 pour une seconde valeur d'entrefer (e2) tel que la première valeur d'entrefer (e1) est supérieure à la seconde (e2). Les valeurs d'entrefer sont choisies de telle sorte que e2 correspond à la valeur finale théorique de l'épaisseur de la pièce et la valeur d'entrefer e1 à cette même épaisseur augmentée du foisonnement de la préforme. Cette configuration permet d'éviter les risques de manque de résine ou d'essorage interlaminaire de ladite résine.

Avantageusement, l'outillage selon l'invention comprend des moyens de perçage permettant de percer la préforme au cours de la consolidation.

L'intégration de ces moyens de perçage permet de profiter de la fluidité de la résine et de réaliser des trous dans la pièce sans y couper les fibres.

La combinaison de ces différentes caractéristiques permet de fabriquer des pièces en composite thermoplastique renforcées par des fibres continues à des cadences de production élevées. De telles pièces peuvent contenir jusqu'à 70% de fibres de renfort et présentent une qualité tant du point de vue de la géométrie que de la santé matière, compatible avec les applications aéronautiques les plus exigeantes.

La figure 1, déjà citée, est un synopsis, vue en coupe, de l'estampage d'un flan composite thermoplastique précompacté constitué de 3 plis de fibres continues selon l'art antérieur. Figure 1A avant estampage, et figure 1B lors de l'application du poinçon de formage.

La figure 2 est un exemple vue en bout d'une pièce selon l'invention comportant un simple pliage.

La figure 3 est un exemple vu de dessus des plis constituant la pièce de la figure 2.

La figure 4 est un exemple d'agencement en panoplie dans une nappe des plis de la figure 3.

La figure 5 est un exemple vu en bout du positionnement de l'empilage de plis dans l'outillage de consolidation, figure 5A selon une génératrice de référence, figure 5B selon une face de référence.

La figure 6 est un exemple de pli découpé avec un détrompeur pour faciliter l'alignement de celui-ci sur une génératrice de formage.

La figure 7 représente l'empilage et la mise en référence relative des plis constituant la pièce de la figure 2 selon une mise en référence correspondant à la figure 5B.

La figure 8 est un exemple en perspective d'une pièce trièdre pouvant être obtenue par le procédé selon l'invention.

La figure 9 est un exemple vue de dessus de l'empilement de plis prédécoupés pour la fabrication de la pièce de la figure 7 par le procédé selon l'invention.

La figure 10 est une vue en perspective d'un dispositif de mise en oeuvre du procédé selon l'invention. Figure 10A pour la partie matrice, figure 10B pour la partie poinçon.

La figure 11 est un synopsis de la mise en oeuvre du procédé selon l'invention avec le dispositif de la figure 10 selon une section AA de cet outillage. Figure 11A avant fusion de la matrice, figure 11B après fusion de la matrice et jusqu'au refroidissement de la pièce et avant son démoulage.

La figure 12 est une vue de détail du dispositif d'étanchéité entre le poinçon et la matrice.

La figure 13 est diagramme temps-température-pression donnant un exemple de cycle appliqué au cours du procédé selon l'invention.

Le procédé d'estampage des composites thermoplastiques à fibres continues selon l'art antérieur, figure 1, utilise des flans pré-compactés, c'est à dire des plaques de matière (10) constituées de plis (11, 12,13) sous forme de nappes ou de tissus de fibres continues préalablement consolidées.

Cette consolidation initiale est réalisée par exemple par un procédé tel que décrit dans la demande de brevet WO2008/031866. Le procédé d'estampage selon l'art antérieur utilise un poinçon (2) et une matrice (1), le flan étant formé dans l'entrefer entre le poinçon et la matrice.

Pour pouvoir être formé le flan doit être chauffé à une température permettant de ramollir suffisamment la résine pour rendre possible les glissements interlaminaires par fluage de ladite résine comprise entre les plis.

Cette température est proche ou supérieure à la température de fusion de la résine. Chauffé à cette température le flan perd sa cohésion et l'application du poinçon (2) permet de déclencher le glissement relatif des plis, de sorte que ceux-ci ne subissent pas de déformation et conservent leur longueur initiale. Le formage s'effectue à quantité de résine constante, c'est à dire la quantité de résine initialement présente dans le flan consolidé, si bien que les zones extrêmes du flan, en plus de faire apparaître le glissement interlaminaire sont dépourvues de résine et présentent une très faible cohésion.

Ces zones de faible cohésion doivent être éliminées par détourage ultérieur de la pièce ainsi réalisée.

Un tel procédé nécessite donc deux cycles de chauffage - refroidissement :

- un premier lors du compactage pour constituer les plaques consolidées
- un second lors de l'estampage

Par ailleurs les pièces ainsi obtenues doivent nécessairement être détourées afin d'éliminer les bords de faible cohésion.

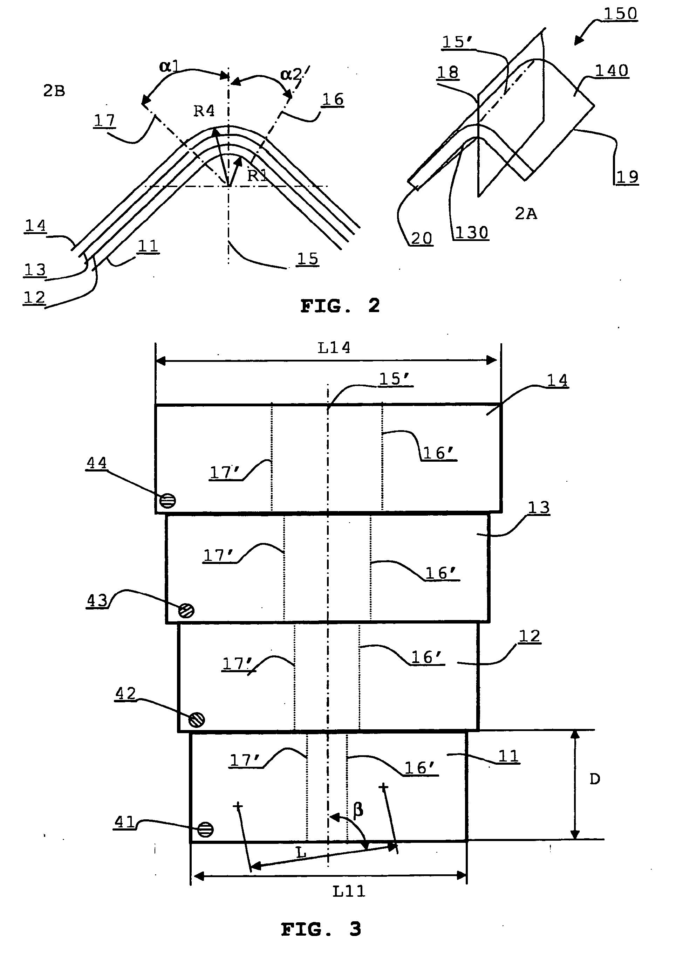

Selon l'invention, figure 2, les plis (11, 12, 13, 14) constituant la pièce sont découpés à des dimensions différentes selon leur position dans l'épaisseur, figure 3.

Dans cet exemple, figure 2, le formage est un simple pliage selon un rayon de pliage variable entre un rayon R1 sur la face intérieure (130) et un rayon R4 sur la face extérieure (140). Si $\delta$ est l'épaisseur d'un pli après consolidation, la pièce (150) de l'exemple comprenant 4 plis, la relation entre les deux rayons de pliage est donnée par :

$$4 = R1 + 4\delta.$$

Pour une pièce comprenant un nombre quelconque de plis, le rayon de pliage du Nième pli compté depuis la face intérieure au rayon de pliage, pliée selon un rayon R1 est donné par la relation :

$$RN = R1 + N\delta$$

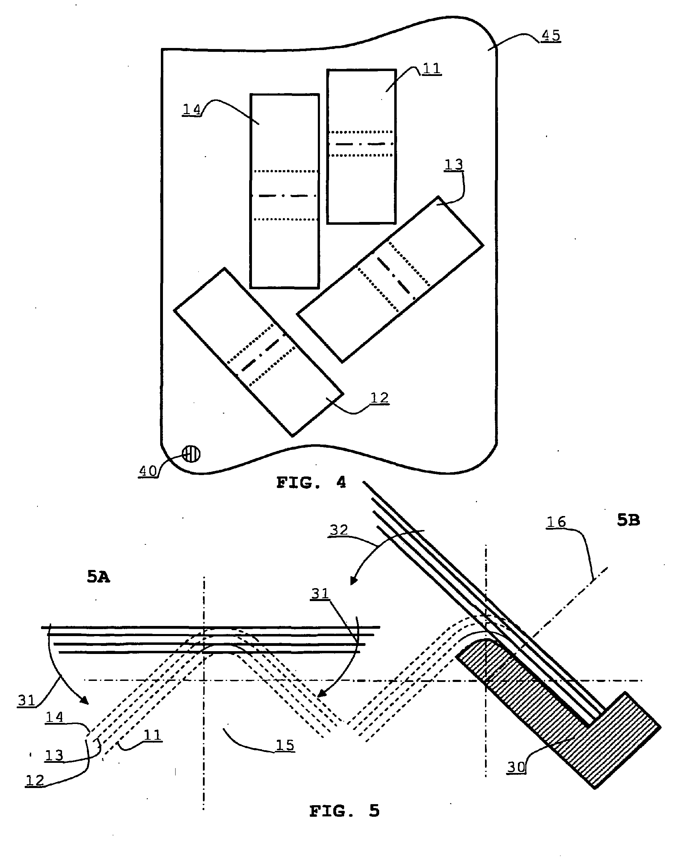

Les fibres contenues dans chaque pli (11, 12, 13, 14) sont disposées selon une orientation spécifique (41, 42, 43, 44). Les différents plis constituant la pièce (150) sont découpés dans une nappe pré-imprégnée (45), comprenant des fibres unidirectionnelles (40), figure 4. Lesdits plis (11, 12, 13, 14) sont découpés dans la nappe selon leur orientation et aux cotes déterminées par leur position dans l'épaisseur de la pièce et l'orientation desdites cotes par rapport aux pliages.

Les plis sont superposés dans l'ordre afin de constituer une préforme, l'assemblage des plis étant stabilisé par une ligne de soudure.

Les plis (11, 12, 13, 14) peuvent ainsi être positionnés en les superposant selon la trace (15', 16', 17') à la surface de chaque pli, d'un plan (18) défini par un axe radial au rayon de pliage (15, 16, 17) et s'étendant d'une extrémité à l'autre de la pièce perpendiculairement à cet axe. Tout axe radial compris dans le secteur angulaire ($\alpha1+\alpha2$) délimitant

le rayon de pliage peut convenir à cette fin, mais le choix le plus judicieux sera fonction du positionnement de la préforme dans l'outillage de formage.

Par exemple, il est possible de choisir de superposer les plis selon le plan radial médian (18) du rayon de pliage, figure 5A. Dans ce cas, les plis seront assemblés par soudure le long de la trace (15') sur les différents plis de ce plan, et cette ligne devra être mise en concordance avec la même ligne sur l'outillage.

Lors de la consolidation, sous l'effet des pressions de pré-compactage (P1) et de compactage (P2), il n'y aura pas de déplacement relatif autre que dans le sens de l'épaisseur le long de cette ligne.

Tout se passe comme si l'on avait effectué un formage de la préforme selon une cinématique de formage identique à celle représentée figure 1, selon les flèches (31) de la figure 5A. C'est pourquoi par analogie les lignes (15', 16', 17') sont désignées par le terme « génératrices de formage ».

Cependant, la préforme, bien que les plis soient localement solidarisés par soudure ne présente pas ou très peu de rigidité. De sorte qu'il est très difficile de mettre celle-ci en position selon une ligne au sommet de l'outillage.

A cette fin les plis peuvent être découpés de sorte à faire apparaître un détrompeur (33) à chaque extrémité de la génératrice de formage. Ces détrompeurs permettent de superposer plus facilement les plis et de positionner la préforme ainsi assemblée dans l'outillage, une encoche étant, par exemple, prévue dans celui-ci pour recevoir les détrompeurs. Une fois la préforme installée dans l'outillage les détrompeurs sont coupés, avantageusement lors de la fermeture de l'outillage.

Alternativement, il est avantageux d'utiliser un bord (19, 20) et une face de la préforme en tant que surfaces de référence, figure 5B.

Dans ce cas, tout ce passe comme si l'on effectuait un pliage de la préforme selon une génératrice de formage (16') située à la tangence entre le rayon de pliage et la face de référence. Dans ce cas, les plis se superposent et sont soudés selon cette génératrice de formage (16'). Ce mode de superposition des plis et de positionnement de la préforme permet d'utiliser un gabarit (30) pour le positionnement des plis entre eux, figure 5B, et une mise en place plus précise de la préforme dans l'outillage.

Les dimensions des plis sont déterminées par leur position dans l'empilement et par l'orientation de la cote considérée par rapport au pliage. Ainsi dans le cas d'une pièce (150) présentant un simple pliage, caractérisé par une génératrice de formage (15', 16', 17'), les cotes (D) mesurées parallèlement à cette génératrice ne sont pas modifiées d'un pli à l'autre. Une cote (L1) mesurée perpendiculairement à la génératrice de formage sera modifiée en fonction de la position du pli dans l'épaisseur de la pièce et du rayon R de pliage.

Par exemple, si l'angle de pliage est ($\alpha1+\alpha2$) et l'épaisseur d'un pli $\delta$, alors la longueur L14 d'un pli situé à l'extérieur du rayon de pliage et mesurée perpendiculairement à la génératrice de formage (16') sera plus importante que la longueur (L11) d'un pli situé à l'intérieur du rayon de pliage. Dans l'exemple d'une pièce (150) comprenant 4 plis.

$$L14 = L11 + 3(\alpha1+\alpha2).\delta$$

Dans le cas de N plis :

$$LN = L11 + (N-1).(\alpha1+\alpha2).\delta$$

Les angles étant exprimés en radians.

Si une cote L est orientée selon un angle $\beta$ par rapport à la génératrice de formage, sa variation totale $\Delta$ en fonction de l'épaisseur dans une pièce comprenant N plis d'épaisseur $\delta$ s'écrit :

$$\Delta = N.(\alpha1+\alpha2).\delta.\sin(\beta)$$

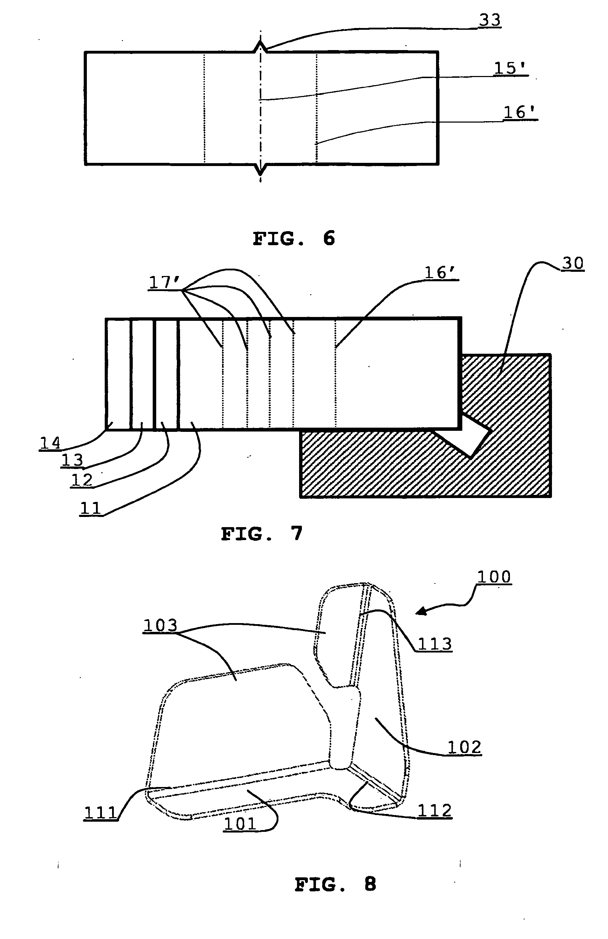

Selon un autre exemple de réalisation, le procédé selon l'invention peut être utilisé pour fabriquer des pièces structurales trièdres (100), figure 8. De telles pièces présentent des ailes (101, 102, 103) contenues dans 3 plans sécants. Avantageusement de telles pièces sont développables de sorte que le leur formage s'apparente à un pliage, selon plusieurs génératrices de formage. Le procédé selon l'invention est également applicable à des pièces non développables, par exemple à des pièces telles que celle représentée figure 7 dont au moins une aile présente une double courbure selon des rayons parallèles à l'épaisseur de la pièce, à condition que le rayon de courbure de l'une au moins des deux courbures de ladite aile soit supérieur à 1000 fois l'épaisseur.

Pratiquement le rayon de courbure admissible dépend des tolérances de contour de la pièce et des tolérances de désalignement des fibres.

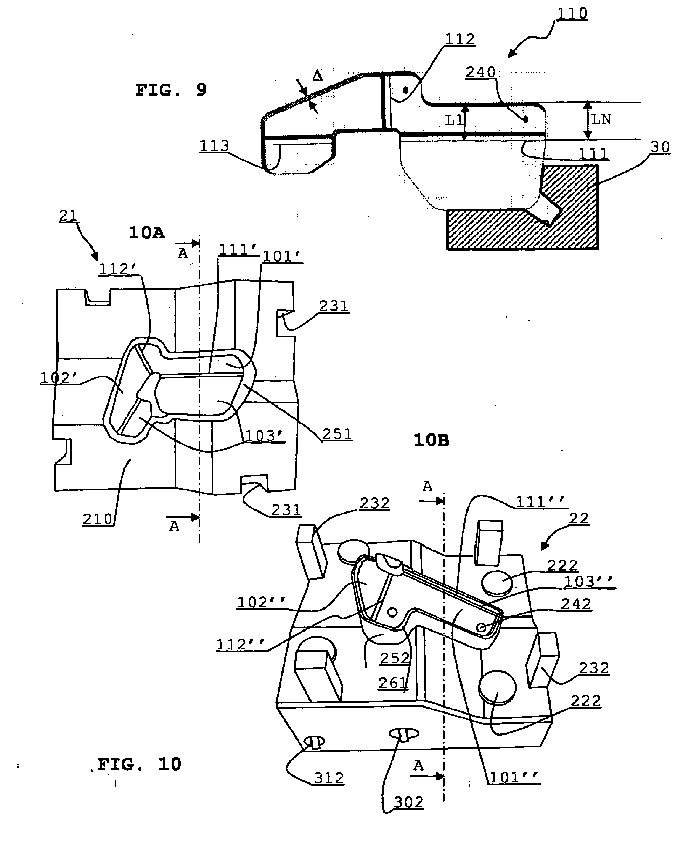

Pour fabriquer une telle pièce (100), des plis sont découpés à des cotes fonction de la position desdits plis dans l'épaisseur de la pièce et de l'orientation des fibres selon les mêmes principes qu'énoncé ci-avant, figure 9. Les plis en question sont découpés dans de la nappe ou dans des tissus pré-imprégnés de résine thermoplastique. La pré-imprégnation peut être réalisée sous forme de film pré-adhérisé de chaque côté de ladite nappe ou dudit tissus, ou par poudrage.

La découpe du pré-imprégné est réalisée par tout moyen adapté connu de l'homme du métier tel que lame vibrante ou laser, avantageusement à l'aide d'une machine de découpe à commande numérique.

Les différents plis se superposent au niveau des génératrices de formage (111, 112, 113). La position de ces génératrices est déterminée en fonction du balancement de la pièce et de sa mise en position sur l'outillage.

Ici l'aile (103) présentant la surface la plus importante est choisie comme référence, et la pièce peut être drapée selon un gabarit (30) référençant cette surface.

Partant de la génératrice de formage (111), correspondant au pliage entre cette face de référence (103) et la face contiguë perpendiculaire (101) les cotes mesurées perpendiculairement à la génératrice de formage sont définies pour chaque pli en fonction de sa position dans l'épaisseur de la pièce entre la valeur L1 et la valeur LN. L'angle de pliage étant ici de 90°, et l'épaisseur totale de la pièce de 2,5mm, la variation de largeur totale des plis (LN-L1) sera :

$$2,5.(\pi/2)= 3,927 \text{ mm}$$

Pour calculer, la variation de largeur ($\Delta$) des plis situés sur le bord, orienté selon un angle $\beta$, de l'aile (102) perpendiculaire à ces deux premières ailes, il faut combiner les effets de deux pliages à 90° d'angle de pliage et dont les génératrices de formage sont également perpendiculaires, de sorte que :

$$\Delta = \sqrt{(2,5\pi/2)^2.(\sin^2(\beta) + \sin^2(\pi/2 - \beta)} = 3,927mm$$

Pour des cas plus complexes de combinaison de pliage il faut décomposer les directions de pliage selon un repère orthonormé et combiner les contributions de chaque pliage comme ci-dessus. Ces calculs sont avantageusement réalisés par un logiciel de conception et fabrication assisté par ordinateur (CFAO), qui permet en outre de générer le contour de chaque pli en fonction de son orientation et de l'intégrer de manière optimale dans une panoplie de découpe.

La distance entre la génératrice de formage et le bord d'un pli est alors plus grande pour un pli situé à l'extérieur de ce rayon qu'à l'intérieur.

Les plis sont superposés de manière précise afin de constituer la préforme (110). Cette superposition précise peut être réalisée manuellement soit par l'utilisation d'un gabarit (30) et/ou avec l'aide d'un dispositif d'assistance projetant les contours des plis successifs sur la table de drapage.

Les plis superposés sont immobilisés les uns par rapport aux autres par l'intermédiaire de soudures réalisées le long des génératrices de formage.

Ces soudures ont pour fonction d'immobiliser les plis les uns par rapport aux autres jusqu'à la dépose de la préforme (110) ainsi obtenue sur l'outillage. La présence de ces soudures de gène pas le formage car les zones soudées sont remises en fusion lors de la phase de consolidation.

Alternativement le drapage des plis peut être fait directement dans l'outillage sur le poinçon (22) ou dans la matrice (21) qui servent alors de gabarits. Avantageusement la bordure du poinçon (262) peut servir de butée pour positionner les plis.

Une fois la préforme (110) placée dans l'outillage, la trace des génératrice de formage (111, 112, 113) sur la préforme se superpose sensiblement aux traces de ces génératrice sur le poinçon (111", 112", 113") et sur la matrice (111', 112', 113').

Un exemple d'outillage de mise en oeuvre du procédé selon l'invention, figure 10, comprend un poinçon (22) et une matrice(21). Ces deux ensembles comprennent des dispositifs de guidage (231, 232). A titre d'exemple de tels éléments de guidage sont constitués par un tenon (232) de longueur supérieure à la différence entre l'épaisseur maximale de la préforme (110) et l'épaisseur finale de la pièce à réaliser (100), usiné ou fixé sur le poinçon (22) ou la matrice (21), et d'une mortaise de profil complémentaire (231), pratiquée sur l'élément en vis à vis. Le tenon (232) et la mortaise (231) sont spécifiquement ajustés afin de réaliser une concordance parfaite des deux formes. Le poinçon et la matrice sont montés chacun sur les plateaux (51, 52) d'une presse chauffante (non représentée). Avantageusement au moins l'un des deux est monté flottant par rapport au référentiel de ladite presse de sorte que le mouvement de fermeture relatif du poinçon (22) par rapport à la matrice (21) ne contrarie pas le guidage relatif d'un élément par rapport à l'autre.

Le poinçon et la matrice reproduisent les faces de la pièce (101', 102', 103', 101", 102", 103") la distance entre les faces correspondantes du poinçon (101", 102", 103") et de la matrice (101', 102', 103') définissant un entrefer lorsque le poinçon est installé sur la matrice. Cet entrefer est minimum (e2) lorsque le poinçon (22) et la matrice sont en contact au niveau de leurs plans de joint (210, 220).

La base de la forme du poinçon fait saillie par rapport au plan de joint (220) de même que l'empreinte de la matrice est en creux par rapport au plan de joint (210) de celle-ci, de sorte que les surfaces de contour latérales du poinçon (252) viennent s'ajuster dans les surfaces de contour latérales (251) en creux de la matrice. A cette fin les surfaces latérales de la matrice sont en légère dépouille, d'un angle de l'ordre de 0,5°, de sorte que le périmètre des surfaces latérales contour de l'empreinte pris dans une section au niveau du plan de joint est plus long que le périmètre des surfaces latérales de contour pris dans une section située à une certaine distance du plan de joint vers l'intérieur de la matrice.

Au niveau du plan de joint les surfaces latérales de contour (251) de la matrice présente un jeu de l'ordre de 0,2 mm avec les surfaces latérales de contour (252) du poinçon. Du fait de la dépouille de l'empreinte de la matrice, ce jeu est réduit à une valeur comprise entre 0,05 et 0,1 mm à l'autre extrémité des surfaces de contour latérales.

Pour éviter tout risque de coincement entre le poinçon et la matrice lors de la fermeture ou de l'ouverture de la presse, les éléments de guidage (231, 232) doivent être réalisés et ajustés avec soin. Pour une pièce telle que représentée figure 7, qui s'inscrit dans un cube de 300mm de côté, le jeu relatif entre les éléments de guidage (231, 232) est inférieur ou égal à 0,02mm.

Avantageusement le poinçon possède une bordure (262) faisant saillie par rapport aux faces de la forme. Cette bordure, vient se loger dans une rainure (261) pratiquée sur le pourtour de la forme de la matrice lors de la fermeture du moule.

Cette bordure favorise d'une part une mise en position précise de la préforme dans l'outillage, et d'autre part permet de figer le volume de la pièce lorsque l'outillage est fermé à la valeur de l'entrefer minimum, évitant ainsi toute perte de résine et permettant également la formation de bords nets.

Au sommet de la bordure est placé un jonc (23) constitué d'une matière apte à se déformer sans se rompre sous l'effet de la fermeture de la presse et apte à résister à une température égale ou supérieure à la température de fusion de la résine constituant la pièce.

A titre d'exemple, le jonc (23) peut être constitué d'aluminium ou de silicone. L'écrasement de ce jonc (23) au delà d'une position relative donnée de la matrice et du poinçon permet d'étancher l'entrefer compris entre la forme du poinçon et l'empreinte de la matrice.

Dans cet exemple de réalisation, le poinçon est monté sur le plateau fixe de la presse et la matrice sur le plateau mobile. Préalablement à la mise en oeuvre du procédé selon l'invention, toutes les surfaces de l'empreinte et de la forme sont enduites d'un agent de démoulant approprié afin d'éviter tout collage de la résine sur les surfaces de l'outillage.

La préforme (110) étant constituée, celle-ci est placée sur le poinçon (22), l'outillage étant ouvert. Avantageusement des perçages (240) peuvent être prédécoupés dans les plis constituant la préforme. Ces perçages prédécoupés s'enfilent sur des picots (242) réalisés sur le poinçon. Lesdits picots (242) sont calibrés au diamètre final du perçage.

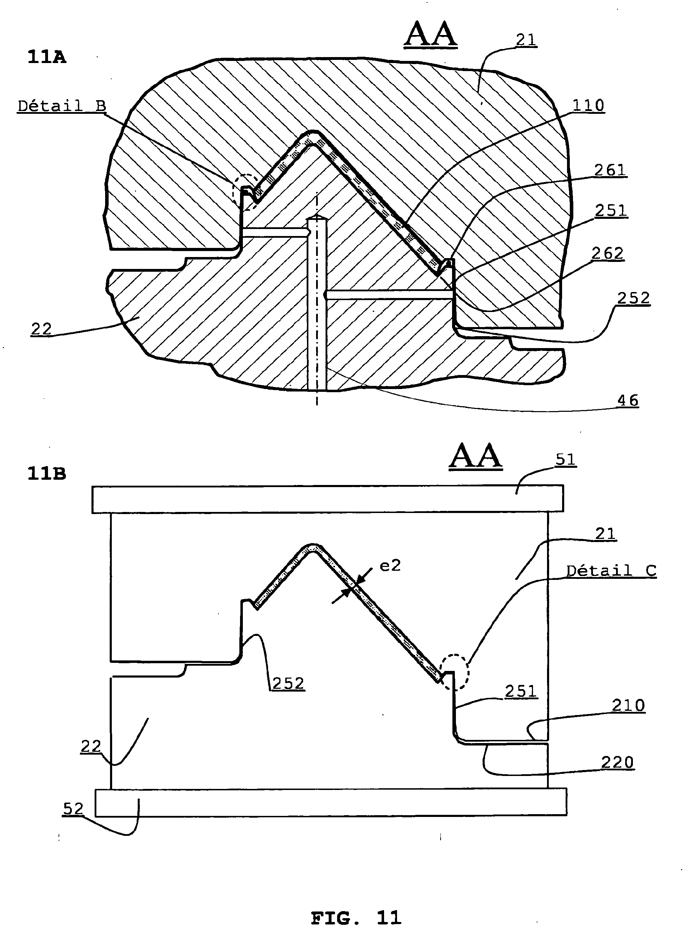

L'outillage est alors refermé par descente de la matrice sur le poinçon, figure 11A. Un dispositif d'aspiration est connecté au poinçon ou à la matrice par l'intermédiaire d'un connecteur (302). Ce connecteur est relié à un réseau d'aspiration (46) qui débouche sur les surfaces latérales de contour du poinçon ou de la matrice.

La préforme étant placée sur le poinçon, l'outillage est refermé au moyen de la presse. Une pression, P1, au moins égale à 2 daN/cm$^2$ est appliqué sur la préforme. A cette fin l'effort de compression généré par la presse, est réglé à une valeur telle que cet effort divisé par la surface projetée de l'empreinte dans un plan normal à la direction de cet effort soit au moins égale à 2 daN/cm$^2$.

L'épaisseur de la préforme fait que malgré l'application de cette pression, le jonc (23) n'est pas écrasé et par conséquent la chambre constituée par l'entrefer entre la forme du poinçon et l'empreinte de la matrice et contenant la préforme, n'est pas étanche. Le dispositif d'aspiration peut dans ces conditions aspirer les gaz dans cette chambre grâce au jeu subsistant entre les surfaces latérales de contour (251, 252).

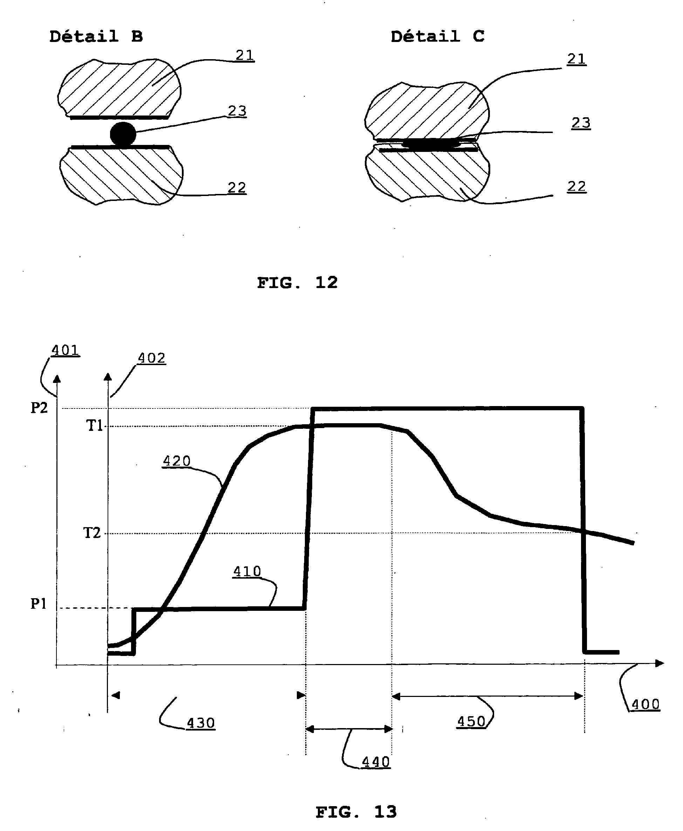

Le cycle de consolidation, figure 13, est constitué de 3 phases correspondant à des temps d'application de la pression et de la température. Le cycle de chauffage refroidissement (420) est lancé dès la fermeture de l'outillage, et consiste en un chauffage jusqu'à une température T1, égale ou supérieure à la température de fusion de la résine. Durant cette première phase du cycle, une pression de contact, P1, au moins égale à 2 daN/cm$^2$ est appliquée sur la préforme.

Lorsque la température s'approche de la température de fusion de la résine, celle-ci se fluidifie et le foisonnement peut être cassé. L'application de la pression P1 comprime la préforme et lorsque l'entrefer atteint une valeur (e1) correspondant à l'épaisseur théorique de la pièce augmentée de la valeur théorique du foisonnement, la rainure (261) de la matrice entre en contact avec le jonc (23) ce qui a pour effet d'étancher la chambre dans laquelle se trouve la préforme. Ladite chambre étant étanche, le dispositif d'aspiration ne risque pas d'aspirer de la résine. L'aspiration peut être stoppée.

Lorsque la température atteint la température de fusion de la résine, la pression est augmentée à une valeur P2 ramenée à la surface projetée de l'empreinte, égale ou supérieure à 10 daN/cm$^2$. Le déplacement relatif de la matrice compacte la préforme et écrase le jonc (23). La chambre étant étanche, la quantité de résine y reste constante.

La température est maintenue sous cette pression pendant un temps (440) suffisant pour permettre le compactage optimal de la préforme et une répartition homogène de la résine dans celle-ci. Le moule est alors refroidi jusqu'à une température inférieure ou égale à la température de transition vitreuse de la résine (T2), température à laquelle la pièce présente une rigidité suffisante pour pouvoir être démoulée sans difficulté. Avantageusement le refroidissement peut être accéléré par la circulation d'un fluide caloporteur (eau, huile ...) dans l'outillage. La pression de compactage P2 est maintenue durant la phase de refroidissement. Cette pression correspond à un entrefer final (e2), déterminé en fonction de l'épaisseur théorique de la pièce.

L'épaisseur théorique finale de la pièce correspond à l'épaisseur théorique d'un pli, δ, multipliée par le nombre de plis constituant la préforme.

Le foisonnement peut être déterminé expérimentalement et est fonction de la nature des plis constituant la préforme ainsi que de la méthode d'imprégnation de ces derniers. Le foisonnement est par exemple de 34% pour des nappes de fibres de carbone poudrées de résine polyéther-éthercétone (PEEK) et de 50% pour des tissus pré-adhérisés avec un film de polyphénylène-sulfone (PPS). En conséquence, dans le cas d'une pièce constituée de plis sous forme de tissus pré-imprégné d'un film PPS pré-adhérisé, le premier entrefer (e1) sera 1,5 fois plus important que l'entrefer final (e2).

La hauteur du jonc (23) sera prise au moins égale à la différence entre l'entrefer augmenté du foisonnement et l'entrefer théorique (e1-e2).

Le chauffage la matrice et du poinçon peut être réalisé par tout moyen connu de l'homme du métier, par exemple par circulation d'huile chaude, par les plateaux chauffant de la presse d'estampage (51, 52) ou par induction, pour amener la préforme jusqu'à une température de l'ordre de la température de fusion de la résine. L'aspiration des gaz est maintenue durant toute la phase de chauffage (430).

La valeur minimale de l'entrefer (e2) correspond à l'épaisseur théorique finale de la pièce corrigée de la dilatation thermique différentielle entre le matériau constituant la préforme et le matériau constituant l'outillage.

Cette correction est réalisée par un coefficient d'homothétie déterminé expérimentalement et appliqué à la forme générale des outillages dans les 3 directions de l'espace. Cette correction est effectuée par exemple par l'intermédiaire des outils informatique de CFAO utilisés pour la conception et la fabrication desdits outillages. Ce coefficient est par exemple égal à 0,9985 pour un composite à matrice PPS renforcée par des fibres de carbone formé dans un outillage en acier de type contenant 0,4% de carbone, 2% de chrome, du manganèse et du molybdène comme éléments d'alliage (40CMD8). Ainsi, toutes les cotes théoriques de l'outillage sont multipliées par ce coefficient selon les 3 axes pour tenir compte de la dilation différentielle entre le matériau de la préforme et le matériau constituant l'outillage. Dans cet exemple l'outillage présente un coefficient de dilatation supérieur à celui de la préforme, et présentera donc à température ambiante un volume environ 0,45% plus faible qu'à la température de fusion de la résine.

Les formes du poinçon et de la matrice sont également corrigées pour tenir compte du retrait angulaire des faces de la pièce lors de son refroidissement. Cette correction angulaire est appliquée sur chaque rayon dont le secteur angulaire (α1+α2) est supérieur à 70°, notamment au niveau des rayons de pliage correspondant aux génératrices de formage. Cette correction angulaire est déterminée expérimentalement, elle est par exemple de 2,75° pour un composite PPS-fibres de carbone. Ainsi pour un secteur angulaire de 90° sur la pièce finie, ce secteur sera réalisé avec un angle de 92,75° sur l'outillage.

Avantageusement, des entretoises (222), figure 9B, fixées sur le plan de joint du poinçon (220) et/ou de la matrice (210) sont ajustées de sorte à définir de manière précise la distance séparant les deux éléments, et par conséquent l'entrefer (e2), lors de la fermeture, c'est à dire lorsque le poinçon repose sur la matrice. Selon l'art antérieur, l'étanchéité de l'outillage poinçon-matrice est généralement réalisée sur le plan de joint. Dans cet exemple de réalisation de l'outillage l'étanchéité est réalisée sur les surfaces de contour latérales du poinçon (252) et de la matrice (251) et le jonc (23). Il est ainsi possible de régler de manière très précise et simple, par exemple par l'ajustement des entretoises (222), la valeur de l'entrefer (e2) dans l'empreinte lors de la fermeture de l'outillage, indépendamment de la contrainte d'étanchéité.

L'outillage est ouvert par écartement du poinçon et de la matrice au moyen de la presse et la pièce est démoulée.

Ainsi réalisée, la pièce est terminée et ne nécessite plus aucun détourage.

Avantageusement des perçages peuvent être réalisés au cours de la phase de consolidation. A cette fin des aiguilles escamotables sont placées dans le poinçon par exemple à l'emplacement des picots (242). En position escamotée, lesdites aiguilles affleurent la surface de la forme (101"). Dans ce cas la préforme ne comporte pas de découpe correspondant aux trous (240). Au cours de la phase de consolidation lorsque la résine est à la température de fusion, les aiguilles, enduites d'un agent de démoulage ou revêtues de sorte à éviter tout collage de résine sur leur surface, sont sorties par l'intermédiaire d'un organe de manoeuvre (312) et pénètrent dans la préforme en écartant les fibres jusqu'à venir en contact avec la face de la matrice en vis à vis. Les aiguilles restent en position sortie durant toute la phase de consolidation et la phase de refroidissement subséquente. Ainsi lors du démoulage la pièce présentera des trous à l'emplacement des aiguilles. Pour des trous de faible diamètre, compris entre 1mm et 4 mm, de tels perçages peuvent ainsi être obtenus sans couper de fibres, et avec une désorientation restant acceptable des fibres sur les bords du trou. Pour des perçages de diamètre plus important, il est possible de combiner une découpe préalable du trou dans les plis et un perçage à l'aiguille durant la consolidation. Le dispositif d'escamotage-sortie des aiguilles peut être de nature mécanique, par exemple par excentrique, ou pneumatique.

La combinaison du procédé et du dispositif pour sa mise en oeuvre selon l'invention permet d'atteindre des précisions d'épaisseur de pièce de +/- 0,05mm par rapport à l'épaisseur nominale, des précisions de contour de +/- 0,1mm par rapport au contour nominal, directement à l'issue de la consolidation sans reprise ultérieure de la pièce en usinage.

Comparé au procédé d'estampage des composites thermoplastiques à fibres continues de l'art antérieur, le procédé et son dispositif de mise en oeuvre permettent de réduire le temps de cycle de fabrication d'une pièce finie de l'ordre de 35% tout en réduisant le taux de chute de moitié.

## Revendications

**1.** Procédé de fabrication d'une pièce structurale (100, 150) comprenant au moins deux ailes s'étendant dans des plans sécants, constituée d'un matériau thermoplastique composite à renfort fibreux comprenant un empilement d'au moins deux plis (11, 12, 13, 14) de fibres continues, lesdites fibres se prolongeant d'une aile à l'autre, ledit procédé comprenant :

- une étape de découpe consistant à découper les au moins deux plis dans un tissu et/ou une nappe (45) de fibres pré-imprégnées d'une résine thermoplastique ;
- une étape de drapage consistant à assembler les plis de manière à créer une préforme (110) ;
- une étape de consolidation consistant à compacter la dite préforme à la forme définitive de la pièce en la soumettant à un cycle de température (420) et de pression (410) déterminé ;
**caractérisé en ce que** :
- dans l'étape de découpe, la découpe de chaque pli est réalisée selon un contour déterminé par l'orientation des fibres et la position du pli dans l'empilement ainsi que par la position de génératrices de formage (15', 16', 17', 111, 112, 113) sur chaque pli, de sorte à compenser des décalages interlaminaires des bords de plis, consécutifs aux pliages de la préforme, chaque génératrice de formage correspondant à une ligne de pliage d'une préforme plane pour obtenir la pièce,
- dans l'étape de drapage, les plis superposés sont immobilisés les uns par rapport aux autres par l'intermédiaire de soudures réalisées le long d'au moins une génératrice de formage de la préforme (15', 16', 17', 111, 112, 113),
- l'étape de consolidation est réalisée dans un outillage comprenant un poinçon (22) et une matrice (21) rigides, délimitant une chambre étanche entre ledit poinçon et ladite matrice, dont l'entrefer entre leurs surfaces définit la forme de la pièce.

**2.** Procédé selon la revendication 1, **caractérisé en ce que**, dans l'étape de découpe, les plis sont découpés de sorte à faire apparaître un détrompeur (33) à chaque extrémité d'au moins une génératrice de formage, ces détrompeurs permettant de superposer les plis et de positionner la préforme ainsi assemblée dans l'outillage, les détrompeurs étant coupés lors de la fermeture de l'outillage, une fois la préforme (110) installée dans ledit outillage.

**3.** Procédé selon la revendication 1 ou 2, **caractérisé en ce que** l'étape de consolidation comprend l'application à la préforme d'un cycle de pression-température (410, 420) comprenant :

- une montée en température sous une première pression P1 (430) appliquée à la préforme jusqu'à une température égale ou supérieure à la température de fusion de la résine ;
- un maintien à cette température sous une pression P2 supérieure à P1 (440) ;
- un refroidissement jusqu'à une température (T2) inférieure à la température de transition vitreuse de la résine sous la pression P2 (450);
- un relâchement de la pression.

**4.** Procédé selon la revendication 3, **caractérisé en ce que**, lors de la première montée en température sous une pression P1, l'entrefer entre le poinçon et la matrice est réglé à une première épaisseur (e1), et, lors du maintien à cette température sous une pression P2, l'entrefer entre le poinçon et la matrice est réglé à une seconde épaisseur (e2) telle que la première valeur d'entrefer (e1) est supérieure à la seconde valeur d'entrefer (e2), les valeurs d'entrefer étant choisies de telle sorte que la seconde épaisseur (e2) correspond à la valeur finale théorique de l'épaisseur de la pièce, corrigée de la dilatation thermique différentielle entre le matériau constituant la préforme et le matériau constituant l'outillage, et la première épaisseur (e1) correspond à cette même épaisseur augmentée du foisonnement de la préforme.

**5.** Procédé selon l'une quelconque des revendications 3 à 4, **caractérisé en ce qu'**il comporte une aspiration des gaz contenus dans la chambre étanche durant la montée en température (430).

**6.** Procédé selon l'une quelconque des revendications 3 à 5, **caractérisé en ce que** la pression P1 est au moins égale à 2 daN/cm$^2$ et la pression P2 est égale ou supérieure à 10 daN/cm$^2$.

**7.** Procédé selon l'une quelconque des revendications précédentes, **caractérisé en ce qu'**il comporte un perçage de la préforme pendant l'étape de consolidation.

**8.** Procédé selon la revendication 7, **caractérisé en ce que** le perçage est réalisé, par des aiguilles escamotables, sorties pendant l'étape de consolidation, lorsque la résine est à la température de fusion, pénétrant dans la préforme en écartant les fibres jusqu'à venir en contact avec la surface de la matrice en vis à vis, les aiguilles restant en position sortie durant toute l'étape de consolidation subséquente.

**9.** Outillage permettant la mise en oeuvre du procédé selon l'une quelconque des revendications précédentes, ledit outillage comprenant un poinçon (22) et une matrice (21) rigides dont l'entrefer entre les surfaces définit la forme de la pièce structurale (100, 150), **caractérisé en ce que** :

- le poinçon comprend une bordure (262) faisant saillie par rapport à la forme de la pièce,
- la matrice comprend une bordure (261) en creux par rapport à la forme de la pièce ;
- la bordure du poinçon est apte à se loger dans la bordure de la matrice lors de la fermeture de l'outillage ;
- un joint déformable (23) est disposé entre la bordure de la matrice et la bordure du poinçon apte à assurer l'étanchéité de l'espace compris entre le poinçon et la matrice entre deux valeurs d'entrefer, de sorte à former une chambre étanche entre le poinçon et la matrice.

**10.** Outillage selon la revendication 9 **caractérisé en ce qu'**il comprend des moyens aptes à aspirer les gaz contenus dans la chambre étanche durant une phase de montée en température.

**11.** Outillage selon la revendication 9, **caractérisé en ce qu'**il comprend des moyens (251, 252, 222) aptes à appliquer à une préforme placée dans la chambre étanche une pression sensiblement égale à P1 pour une première valeur d'entrefer (e1) et une pression sensiblement égale à P2 pour une seconde valeur d'entrefer (e2) tel que la première valeur d'entrefer (e1) est supérieure à la seconde valeur d'entrefer (e2).

**12.** Outillage selon l'une quelconque des revendications 9 à 11, **caractérisé en ce qu'**il comprend :

- des aiguilles escamotables, enduites d'un agent de démoulage ou revêtues de sorte à éviter tout collage de résine sur leur surface, lesdites aiguilles affleurant la surface de la forme en position escamotée,
- un dispositif d'escamotage / sortie et un organe de manoeuvre aptes à sortir lesdites aiguilles et à les faire pénétrer dans la préforme jusqu'à venir en contact avec la face de la matrice en vis-à-vis.

**Patentansprüche**

**1.** Verfahren zur Herstellung eines Strukturteils (100, 150), umfassend mindestens zwei Flügel, die sich in Schnitteebenen erstrecken, bestehend aus einem thermoplastischen Verbundstoff mit Faserverstärkung, umfassend eine Stapelung von mindestens zwei Lagen (11, 12, 13, 14) von Endlosfasern, wobei sich die Fasern von einem Flügel zum anderen verlängern, wobei das Verfahren umfasst:

- einen Schritt des Ausschneidens, der darin besteht, die mindestens zwei Lagen aus einem Gewebe und/oder einer Schicht (45) von vorimprägnierten Fasern eines thermoplastischen Harzes auszuschneiden;

- einen Schritt des Drapierens, der darin besteht, die Lagen zusammenzufügen, um eine Vorform (110) zu erzeugen;
- einen Schritt der Verfestigung, der darin besteht, die Vorform zur endgültigen Form des Teils zu verdichten, wobei sie einem bestimmten Temperatur- (420) und Druckzyklus (410) unterzogen wird;
**dadurch gekennzeichnet, dass**:
- in dem Schritt des Ausschneidens das Ausschneiden jeder Lage entlang einer durch die Ausrichtung der Fasern und die Position der Lage in der Stapelung sowie durch die Position von Formungsmantellinien (15', 16', 17', 111, 112, 113) auf jeder Lage bestimmten Ausrichtung erfolgt, so dass ein interlaminarer Versatz der Ränder von Lagen als Folge der Faltungen der Vorform ausgeglichen wird, wobei jede Formungsmantellinie einer Faltlinie einer flachen Vorform entspricht, um den Teil zu erhalten,
- in dem Schritt des Drapierens die übereinander angeordneten Lagen zueinander mit Hilfe von Schweißnähten fixiert sind, die entlang mindestens einer Formungsmantellinie der Vorform (15', 16', 17', 111, 112, 113) ausgeführt sind,
- der Schritt der Verfestigung in einem Werkzeug erfolgt, umfassend einen starren Stempel (22) und eine starre Matrix (21), wobei eine dichte Kammer zwischen dem Stempel und der Matrix begrenzt ist, wobei der Spalt zwischen ihren Flächen die Form des Teils definiert.

2. Verfahren nach Anspruch 1, **dadurch gekennzeichnet, dass** in dem Schritt des Ausschneidens die Lagen derart ausgeschnitten werden, dass ein Unverwechselbarkeitselement (33) an jedem Ende mindestens einer Formungsmantellinie erscheint, wobei es diese Unverwechselbarkeitselemente ermöglichen, die Lagen übereinander anzuordnen und die so zusammengefügte Vorform in dem Werkzeug zu positionieren, wobei die Unverwechselbarkeitselemente beim Schließen des Werkzeugs, wenn die Vorform (110) in dem Werkzeug angeordnet ist, abgeschnitten werden.

3. Verfahren nach Anspruch 1 oder 2, **dadurch gekennzeichnet, dass** der Schritt der Verfestigung die Anwendung eines Druck-Temperatur-Zyklus (410, 420) an der Vorform umfasst, bestehend aus:

- einer Erhöhung der Temperatur unter einem ersten Druck P1 (430), der an die Vorform bis zu einer Temperatur gleich oder höher als die Schmelztemperatur des Harzes angelegt wird;
- einem Aufrechterhalten dieser Temperatur unter einem Druck P2 größer als P1 (440);
- einem Abkühlen bis auf eine Temperatur (T2) kleiner als die Glasübergangstemperatur des Harzes unter dem Druck P2 (450);
- einem Nachlassen des Drucks.

4. Verfahren nach Anspruch 3, **dadurch gekennzeichnet, dass** bei der ersten Temperaturerhöhung unter einem Druck P1 der Spalt zwischen dem Stempel und der Matrix auf eine erste Dicke (e1) eingestellt wird, und bei der Aufrechterhaltung dieser Temperatur unter einem Druck P2 der Spalt zwischen dem Stempel und der Matrix auf eine zweite Dicke (e2) eingestellt wird, so dass der erste Spaltwert (e1) größer als der zweite Spaltwert (e2) ist, wobei die Spaltwerte derart gewählt sind, dass die zweite Dicke (e2) dem theoretischen Endwert der Dicke des Teils entspricht, korrigiert um die Differentialwärmedehnung zwischen dem Material, das die Vorform bildet, und dem Material, das das Werkzeug bildet, und dass die erste Dicke (e1) dieser selben Dicke, erhöht um die Volumensteigerung der Vorform, entspricht.

5. Verfahren nach einem der Ansprüche 3 bis 4, **dadurch gekennzeichnet, dass** es eine Ansaugung der in der dichten Kammer enthaltenen Gase während der Temperaturerhöhung (430) umfasst.

6. Verfahren nach einem der Ansprüche 3 bis 5, **dadurch gekennzeichnet, dass** der Druck P1 mindestens gleich 2 daN/cm$^2$ und der Druck P2 gleich oder größer als 10 daN/cm$^2$ ist.

7. Verfahren nach einem der vorhergehenden Ansprüche, **dadurch gekennzeichnet, dass** es eine Durchbohrung der Vorform während des Verfestigungsschrittes umfasst.

8. Verfahren nach Anspruch 7, **dadurch gekennzeichnet, dass** die Bohrung durch einziehbare Nadeln erfolgt, die während des Verfestigungsschrittes ausgefahren werden, wenn sich das Harz auf der Schmelztemperatur befindet, und die in die Vorform eindringen, wobei sie die Fasern beabstanden, bis sie mit der Fläche der gegenüberliegenden Matrix in Kontakt kommen, wobei die Nadeln während des gesamten anschließenden Verfestigungsschrittes in ausgefahrener Position bleiben.

9. Werkzeug, das den Einsatz des Verfahrens nach einem der vorhergehenden Ansprüche ermöglicht, wobei das Werkzeug einen starren Stempel (22) und eine starre Matrix (21) umfasst, wobei der Spalt zwischen den Flächen die Form des Strukturteils (100, 150) definiert, **dadurch gekennzeichnet, dass**:

   - der Stempel einen Rand (262) umfasst, der in Bezug zur Form des Teils vorspringend ist,
   - die Matrix einen Rand (261) umfasst, der in Bezug zur Form des Teils ausgehöhlt ist,
   - der Rand des Stempels geeignet ist, in dem Rand der Matrix beim Schließen des Werkzeug angeordnet zu werden;
   - eine verformbare Dichtung (23) zwischen dem Rand der Matrix und dem Rand des Stempels angeordnet und geeignet ist, die Dichtigkeit des Raums zwischen dem Stempel und der Matrix zwischen zwei Spaltwerten zu gewährleisten, um eine dichte Kammer zwischen dem Stempel und der Matrix zu bilden.

10. Werkzeug nach Anspruch 9, **dadurch gekennzeichnet, dass** es Mittel umfasst, die geeignet sind, die in der dichten Kammer enthaltenen Gase während einer Phase der Temperaturerhöhung anzusaugen.

11. Werkzeug nach Anspruch 9, **dadurch gekennzeichnet, dass** es Mittel (251, 252, 222) umfasst, die geeignet sind, an eine in der dichten Kammer angeordnete Vorform einen Druck im Wesentlichen gleich P1 für einen ersten Spaltwert (e1) und einen Druck im Wesentlichen gleich P2 für einen zweiten Spaltwert (e2) anzulegen, so dass der erste Spaltwert (e1) größer als der zweite Spaltwert (e2) ist.

12. Werkzeug nach einem der Ansprüche 9 bis 11, **dadurch gekennzeichnet, dass** es umfasst:

   - einziehbare Nadeln, die mit einem Entformungsmittel überzogen oder beschichtet sind, um jedes Kleben von Harz an ihrer Oberfläche zu verhindern, wobei die Nadeln an die Fläche der Form in der eingezogenen Position grenzen,
   - eine Vorrichtung zum Einziehen/Ausfahren und ein Betätigungselement, die geeignet sind, die Nadeln auszufahren und sie in die Vorform eindringen zu lassen, bis sie mit der Fläche der gegenüberliegenden Matrix in Kontakt kommen.

## Claims

1. Method of manufacturing a structural component (100, 150) comprising at least two flanges extending in secant planes, made of a composite thermoplastic material with fibrous reinforcement comprising a stack of at least two plies (11, 12, 13, 14) of continuous fibres, the said fibres continuing from one flange to the other, the said method comprising:

   - a cutting step consisting in cutting the at least two plies from a fabric and/or a lap (45) of fibres which are preimpregnated with a thermoplastic resin;
   - a laying-up step which consists in assembling the plies so as to create a preform (110);
   - a consolidation step consisting in consolidating the said preform to the definitive shape of the component by subjecting it to a determined cycle of temperature (420) and pressure (410);
   **characterized in that**:
   - in the cutting step, the cutting of each ply is performed along an outline that is determined by the orientation of the fibres and the position of the ply in the stack and by the position of forming generatrices (15', 16', 17', 111, 112, 113) on each ply so as to compensate for the inter-layer offsets between the edges of the plies that result from the bendings of the preform, each forming generatrix corresponding to a line along which a flat preform is folded in order to obtain the component,
   - in the laying-up step, the superposed plies are immobilized relative to one another by welds performed along at least one forming generatrix of the preform (15', 16', 17', 111, 112, 113),
   - the consolidation step is performed in a tooling fixture comprising a rigid punch (22) and a rigid die (21), delimiting a fluidtight chamber between the said punch and the said die, the gap between the surfaces of which defines the shape of the component.

2. Method according to Claim 1, **characterized in that**, in the cutting step, the plies are cut in such a way as to leave visible an indexing feature (33) at each end of at least one forming generatrix, these indexing features allowing the plies to be superposed and the preforms thus assembled to be positioned in the tooling fixture, the indexing features being cut off as the tooling fixture is closed, once the preform (110) is installed in the said tooling fixture.

3. Method according to Claim 1 or 2, **characterized in that** the consolidation step comprises the application to the preform of a temperature - pressure cycle (410, 420) comprising:

> - an increase in temperature at a first pressure P1 (430) applied to the preform until the temperature is equal to or higher than the melting temperature of the resin;
> - a soak at this temperature at a pressure P2 higher than P1 (440);
> - a cooling down to a temperature (T2) below the glass transition temperature of the resin at the pressure P2 (450);
> - a release of pressure.

4. Method according to Claim 3, **characterized in that**, during the first increase in temperature at a pressure P1, the gap between the punch and the die is set to a first thickness (e1) and, during the soak at this temperature at a pressure P2, the gap between the punch and the die is set to a second thickness (e2) such that the first gap size (e1) is greater than the second gap size (e2), the gap sizes being chosen so that the second thickness (e2) corresponds to the theoretical final value for the thickness of the component, corrected for the differential thermal expansion between the material of which the preform is made and the material of which the tooling fixture is made and the first thickness (e1) corresponds to this same thickness increased by swelling of the preform.

5. Method according to either one of Claims 3 and 4, **characterized in that** it comprises an aspiration of the gases contained in the fluidtight chamber during the increase in temperature (430).

6. Method according to any one of Claims 3 to 5, **characterized in that** the pressure P1 is at least equal to 2 daN/cm$^2$ and the pressure P2 is equal to or higher than 10 daN/cm$^2$.

7. Method according to any one of the preceding claims, **characterized in that** it comprises a piercing of the preform during the consolidation step.

8. Method according to Claim 7, **characterized in that** the piercing is performed using retractable needles that are deployed during the consolidation step when the resin is at the melting temperature, and that penetrate the preform by parting the fibres until they come into contact with the die surface opposite, the needles remaining in the deployed position throughout the subsequent consolidation step.

9. Tooling fixture for implementing the method according to any one of the preceding claims, the said tooling fixture comprising a rigid punch (22) and a rigid die (21), the gap between the surfaces of which defines the shape of the structural component (100, 150), **characterized in that**:

> - the punch comprises a border (262) which projects relative to the shape of the component;
> - the die comprises a border (261) that is recessed relative to the shape of the component;
> - the border of the punch is able to become housed in the border of the die as the tooling fixture is closed;
> - a deformable gasket (23) is positioned between the border of the die and the border of the punch to seal the space between the punch and the die between two gap sizes, so as to form a fluidtight chamber between the punch and the die.

10. Tooling fixture according to Claim 9, **characterized in that** it comprises means designed to aspirate the gases contained in the fluidtight chamber during a phase of temperature rise.

11. Tooling fixture according to Claim 9, **characterized in that** it comprises means (251, 252, 222) able to apply to a preform placed in the fluidtight chamber a pressure substantially equal to P1 for a first gap size (e1) and a pressure substantially equal to P2 for a second gap size (e2) such that the first gap size (e1) is greater than the second gap size (e2).

12. Tooling fixture according to any one of Claims 9 to 11, **characterized in that** it comprises:

> - retractable needles covered with a mould-release agent or coated so as to prevent any sticking of resin to their surface, the said needles lying flush with the surface of the form in the retracted position,
> - a retraction/deployment device and an operating member which are able to deploy the said needles and cause them to penetrate the preform until they come into contact with the die face opposite.

**1A**

**1B**

FIG. 1 (art antérieur)

FIG. 2

FIG. 3

FIG. 4

FIG. 5

33

15'

16'

**FIG. 6**

17'

16'

30

14

13

12

11

**FIG. 7**

100

103

113

102

111

101

112

**FIG. 8**

FIG. 9

110

112

240

Δ

L1

LN

113

111

30

21

10A

A

112'

111'

101'

231

102'

103'

251

210

231

10B

A

232

111''

22

222

102''

103''

242

112''

252

232

261

222

FIG. 10

312

A

101''

302

**11A**

Détail B

**AA**  21

110

261

251

262

252

22

46

**11B**

**AA**  51

21

Détail C

e2

252

251

210

22

52

220

FIG. 11

**Détail B**

21

23

22

**Détail C**

21

23

22

**FIG. 12**

401  402

P2

T1

420

T2

410

P1

430

440

450

400

**FIG. 13**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1543942 A
- WO 2008031866 A
- WO 03078164 A